# EUROPÄISCHE PATENTANMELDUNG

(11) **EP 1 202 424 A2**
(43) Veröffentlichungstag der Anmeldung: **02.05.2002**
(21) Anmeldenummer: 01124337.5
(22) Anmeldetag: 22.10.2001
(51) Int. Cl.: H02J 1/06, H02J 1/14

(54) **Anordnung zur Verteilung elektrischer Stromkreise im explosionsgefährdeten Bereich**

(30) Priorität: 25.10.2000 DE 10052846
(71) Anmelder: ABB PATENT GmbH, 68526 Ladenburg (DE)
(72) Erfinder: Huck, Ralf, Dr. rer. nat., 63457 Hanau (DE)
(74) Vertreter: Marks, Frank

(57) **Zusammenfassung**

Die Erfindung betrifft eine Anordnung zur Verteilung elektrischer Stromkreise im explosionsgefährdeten Bereich zum Anschluß mehrerer Feldgeräte an eine Sammelleitung. Dazu wird ein T-förmiges Verteilerelement (2) vorgeschlagen, dessen gegenüberliegende Schenkelenden des durchgehenden Schenkels mit einer Kontaktstifte (61) aufweisenden Steckkontaktvorrichtung (6) und einer zu der Steckkontaktvorrichtung (6) gegenüberliegenden und komplementären, in einem Schaft (73) in vorgegebener Tiefe versenkte Kontaktbuchsen (71) aufweisenden ersten Steckgegenkontaktvorrichtung (7) ausgestattet ist, wobei jeder Kontaktstift (61) über eine Ader einer Sammelleitung (4) mit jeweils einer Kontaktbuchse (71) verbunden ist. Das Schenkelende des abzweigenden Schenkels ist mit einer zweiten, Kontaktbuchsen (81) aufweisenden Steckgegenkontaktvorrichtung (8) ausgestattet, deren Kontaktbuchsen (81) über einen Vierpol (5) mit der Sammelleitung (4) verbunden sind. Die Verteilerelemente (2) sind entlang ihren durchgehenden Schenkeln unter Bildung zünddurchschlagsicherer Spalte zwischen den Kontaktstiften (61) der Steckkontaktvorrichtung (6) und den Schäften (73) der ersten Steckgegenkontaktvorrichtung (7) aufgereiht.

## Beschreibung

Die Erfindung betrifft eine Anordnung zur Verteilung elektrischer Stromkreise im explosionsgefährdeten Bereich zum Anschluß mehrerer Feldgeräte an eine Sammelleitung. Die Erfindung ist zur Verteilung elektrischer Energie zum Zwecke der Stromversorgung der Feldgeräte und darüber hinaus zur Verteilung von elektrischen Stromkreisen zur Kommunikation der im explosionsgefährdeten Bereich angeordneten Feldgeräte mit im nicht-explosionsgefährdeten Bereich, dem sogenannten Wartenbereich, angeordneten Steuerungs- und Regelungssystemen geeignet.

Elektrische Einrichtungen zur Kommunikation zwischen im Feldbereich angeordneten Feldgeräten wie Sensoren, Aktoren und Meßumformer einerseits und im Wartenbereich angeordneten Steuerungs- und Regelungssystemen andererseits werden regelmäßig als Feldbusse bezeichnet.

Üblicherweise ist ein Feldbus als Zweidraht-Leitung ausgeführt. In Abhängigkeit von der zur Speisung der Feldgeräte erforderlichen Speiseleistung und der Busphysik kann vorgesehen sein, die Kommunikation und die Übertragung der Speiseleistung der angeschlossenen Feldgeräte gleichzeitig über dasselbe Adernpaar zu führen.

Zur Kommunikation zwischen einem Feldgerät und einem Steuerungs- und Regelungssystemen sind digitale und analoge Kommunikationsmethoden bekannt. Dabei erfolgt die digitale Kommunikation über eine frequenzmodulierte Stromaufprägung. Die analoge Kommunikation erfolgt über eine übliche und für sich bekannte 0/4..20 mA - Stromschleife. Darüber hinaus ist auch die kombiniert analog/digitale Signalübertragung bekannt. Dabei dient eine für sich bekannte 4..20 mA - Stromschleife zur analogen Signalübertragung, während die digitale Kommunikation über einen frequenzmodulierten aufgeprägten Strom erfolgt (FSK-Modulation). Wenn die zur Versorgung der Feldgeräte benötigte Energie nicht auf die oben beschriebene Weise über die Zweidraht-Leitung zur Verfügung gestellt werden kann, so sind zusätzliche Leitungen für die Energieverteilung erforderlich.

Bei der Installation und Inbetriebnahme von elektrotechnischen Einrichtungen und Ausrüstungen sowie bei Wartungsarbeiten an elektrotechnischen Einrichtungen und Ausrüstungen in verfahrenstechnischen Anlagen, die sich aufgrund ihrer Zweckbestimmung in einer explosionsgefährdeten Atmosphäre befinden, ist die Beachtung einschlägiger Rechtsvorschriften wie die "Verordnung über elektrische Anlagen in explosionsgefährdeten Räumen - ElexV", die auf den europäischen Normen zum Explosionsschutz EN 50 014 ff beruht, verbindlich.

Aufgrund dieser Rechtsvorschriften ist es ausschließlich bei eigensicheren Stromkreisen, die als Zündschutzart "Eigensicherheit" den Regeln der EN 50 020 unterliegen, gestattet, während des laufenden Betriebes elektrische Leitungen bedingungslos ab- und anzuklemmen.

Eigensichere Stromkreise sind jedoch leistungsbegrenzt und somit zum Anschluß von Geräten und Einrichtungen mit einem den vorgegebenen Grenzwert übersteigenden Leistungsbedarf ungeeignet.

Bei allen anderen Zündschutzarten ist vor der Manipulation an elektrischen Stromkreisen die gesamte Anlage soweit spannungsfrei zu schalten, daß metallische Bauteile der betreffenden Stromkreise spannungslos sind. Dabei wird der Fortgang des auf der verfahrenstechnischen Anlage ablaufenden Prozesses für die Zeitspanne zwischen Spannungsfreischaltung und Wiederinbetriebnahme unterbrochen. Anschließend ist der Prozeß neu anzufahren. Diese Unterbrechungen werden von Betreibern derartiger verfahrenstechnischer Anlagen als überaus störend empfunden.

Um dennoch auch unter Spannung stehende, nichteigensichere Stromkreise verbinden oder trennen zu können, ist aus der EP 0561 317 ein explosionsgeschütztes Gerät mit einem explosions- oder schlagwettergeschützten Schaltkammerraum bekannt, in dessen Schaltkammerraum ein zünddurchschlagsicher eingreifender Betätigungsstößel zur Betätigung eines Schalters vorgesehen ist. Dabei wird der nichteigensichere Stromkreis beim Öffnen des Geräts durch den stößelbetätigten Schalter innerhalb des explosions- oder schlagwettergeschützten Schaltkammerraums geöffnet, so daß der abgeschaltete Laststromkreis gefahrlos manipulierbar ist.

Zur Verwendung in explosionsgefährdeten Anlagen sind an elektrische Einrichtungen besondere Anforderungen gestellt, um einen möglichen Explosionsunfall auszuschließen. Diese Anforderungen sind in sogenannten Zündschutzarten zusammengefaßt. Wegen der einfachen Handhabung bei Installation, Wartung und Reparatur wird für elektrische Einrichtungen an Stromkreisen im Feldbereich die Zündschutzart "Eigensicherheit", im folgenden Ex"i" genannt, bevorzugt.

Aus der Zeitschrift "Automatisierungstechnische Praxis" 33 (1991) 9, Seiten 469-473, sind eine Reihe von Konzepten für Feldbussysteme für den Einsatz in explosionsgefährdeten Bereichen bekannt. Im Bild 1a ist die Struktur eines ersten Feldbussystems gezeigt, das ausgehend von einer sogenannten prozeßnahen Komponente, im folgenden PNK genannt, eine einzige Zweidraht-Leitung zur Kommunikation und Speisung der Feldgeräte vorsieht, an die die einzelnen Feldgeräte angeschlossen sind. Das Feldbussystem ist feldseitig ausschließlich mit eigensicheren Stromkreisen ausgeführt. Die Besonderheit dieser Zündschutzart liegt darin, daß es während des laufenden Betriebes gestattet ist, den eigensicher in der Zündschutzart Ex"i" ausgeführten Stromkreis an beliebiger Stelle zu öffnen, zu schließen, kurzzuschließen und/oder zu erden. Die Leistung in einem eigensicheren Stromkreis ist derart begrenzt, daß bei o.g. Handlungen sowohl zündende Funken als auch explosionsauslösende Erwärmungen von Bauelementen innerhalb des eigensicheren Stromkreises sicher vermieden werden. Aus der Leistungsbegrenzung resultiert, daß, wie aus der Zeitschrift "Automatisierungstechnische Praxis" 34 (1992) 11, Seiten 617-622, bekannt ist, weniger als 10 reale Feldgeräte an einen derart ausgeführten Feldbus in Bereichen der Explosionsgruppe IIC anschließbar sind. Werden in der verfahrenstechnischen Anlage mehr als 10 Feldgeräte benötigt, so ist, bedingt durch die Leistungsbegrenzung, ein zweiter Feldbusstrang aufzubauen. Jeder Strang beginnt mit einer Speiseeinrichtung im explosionsfreien Raum und endet im explosionsgefährdeten Bereich.

Die Begrenzung auf 10 Feldgeräte an einen Feldbusstrang reicht aber nicht aus, da neben Analogsignalen für viele Meßumformergeräte oder Stellumformergeräte auch gleichzeitig Binärsignale für Kontakte, Näherungsinitiatoren und Magnetventile zu übertragen sind. Das Verlegen mehrerer paralleler Feldbusstränge schränkt die Vorteile der Feldbustechnik jedoch erheblich ein.

In Bild 1b ist die Struktur eines zweiten Feldbussystems gezeigt, bei dem die Kommunikation über eine eigensicher ausgeführte Zweidraht-Leitung realisiert ist und die Speisung der einzelnen Feldgeräte über jeweils separate Zuleitungen für die Hilfsenergie erfolgt. Das bedeutet zwar, daß einerseits eine Vielzahl von Feldgeräten an einen Feldbus anschließbar ist, aber andererseits für n Feldgeräte n+1 Leitungspaare aus dem Wartenbereich an die Feldgeräte zu führen sind. Um die beschriebenen Vorzüge des als eigensicheren Stromkreis geführten Feldbusses nutzen zu können, müssen zwangsläufig auch die Stromkreise der erforderlichen n Speiseleitungspaare in der Zündschutzart Ex"i" ausgeführt sein.

Ein drittes Feldbussystem ist in 1c gezeigt, das eine Kombination aus dem ersten und dem zweiten Feldbussystem darstellt, wobei eine Mehrzahl von Feldgeräten blockweise mit einer separat heranzuführenden und einzuspeisenden Hilfsenergie versorgt wird. Zur Kommunikation sind mehrere Blöcke an einen Feldbus geschaltet. Jedoch ist weiterhin eine Vielzahl von Leitungspaaren zwischen dem Wartenbereich und den Blöcken von Feldgeräten erforderlich.

Weiterhin ist in Bild 1d ein viertes Feldbussystem dargestellt, bei dem zwar eine Zweidraht-Leitung zur Kommunikation und Speisung der Feldgeräte genügt, aber jedem Feldgerät eine Sicherheitsbarriere zugeordnet werden muß, um das Feldgerät an einem eigensicheren Stromkreis betreiben zu können. Der Feldbus selbst ist als nichteigensicherer Stromkreis ausgeführt. Die im Feldbereich angeordneten Sicherheitsbarrieren sind zusätzlich druckfest gekapselt, Zündschutzart Ex"d", also mit mechanisch aufwendig gefertigten, paßgenauen Ummantelungen versehen. Jede Barriere umfaßt jeweils Mittel zur Strombegrenzung, zur Spannungsbegrenzung, zum Potentialausgleich und zum thermischen Schutz für nachgeschaltete Bauelemente. Die Montage von Barrieren ist bisher nur im nicht-explosionsgefährdeten Bereich zugelassen.

Für alle beschriebenen Feldbussysteme gilt, daß jede Umrüstung, Aufrüstung oder sonstige Manipulation an Betriebsmitteln in nichteigensicheren Stromkreisen ausschließlich im abgeschalteten Zustand gestattet ist. Dies ist eine erhebliche Einschränkung in der praktischen Anwendung von Feldbussen, da eine Erweiterung des Feldbussystems im laufenden Betrieb, also unter Aufrechterhaltung der Kommunikation mit den bereits installierten Teilnehmern ausgeschlossen ist.

Die PNK ist bei angeschlossenen, eigensicheren Stromkreisen üblicherweise mit Mitteln zur Potentialtrennung sowie Mitteln zur Begrenzung von Strom und Spannung ausgestattet.

In der DE 44 03 961 C2 ist ein Speisesystem für einen eigensicheren Feldbus in explosionsgefährdeten Anlagen angegeben, bei dem die Mittel zur Strom- und Spannungsbegrenzung für den eigensicheren Feldbus räumlich getrennt derart angeordnet sind, daß die prozeßnahe Komponente mit Mitteln zur Spannungs- oder Strombegrenzung und daß der Verteiler mit Mitteln zur Begrenzung der jeweils anderen Größe ausgestattet ist. Mit diesem Speisesystem lassen sich mehr als zehn Feldgeräte an einen Feldbus anschließen.

Von Nachteil ist hierbei jedoch, daß durch die Verteilung der Spannungs- und Strombegrenzung auf zwei Einrichtungen auch zwei zu zertifizierende Einrichtungen vorliegen, was sich ungünstig auf die Kosten auswirkt, und daß das System durch den festverdrahteten Verteilerblock während des laufenden Betriebes nicht auf weitere Feldgeräte erweiterbar ist.

Der Feldbusverteiler ist eine festverdrahtete Einheit, an den einerseits der Feldbus und andererseits die Zuleitungen der Feldgeräte herangeführt und an diesen fest oder unter Berücksichtigung von Ex"i" - Bedingungen lösbar angeschlossen werden. Das hat zur Folge, daß der Feldbusverteiler innerhalb des explosionsgefährdeten Bereiches installiert sein muß, falls an diesem Manipulationen erforderlich sind, oder aber insgesamt Ex"i" - Bedingungen geschaffen werden, was aber den Nachteil erbringt, daß wegen der Leistungsbegrenzung nur eine geringe Anzahl von Feldgeräten anschließbar ist. Außerdem ist der festverdrahtete Feldbusverteiler, wie bereits ausgeführt, nicht auf einfache Weise an eine unterschiedliche Anzahl von Feldgeräten anpaßbar.

Der Erfindung lag daher die Aufgabe zugrunde, eine Anordnung zur Verteilung elektrischer Stromkreise im explosionsgefährdeten Bereich zum Anschluß mehrerer Feldgeräte an eine Sammelleitung zu schaffen, die unkompliziert sowohl an eine unterschiedliche Anzahl als auch an unterschiedliche Arten von Feldgeräten, nämlich eigensichere und wegen des hohen Leistungsbedarfs auch nichteigensichere Feldgeräte, anpaßbar ist und an der im laufenden Betrieb Manipulationen auch im explosionsgefährdeten Bereich vorgenommen werden können.

Erfindungsgemäß wird diese Aufgabe mit den Merkmalen des Anspruchs 1 gelöst. Die Unteransprüche geben vorteilhafte und zweckmäßige Ausgestaltungen der Erfindung wieder.

Der Kern der Erfindung ist ein aufreihbares Verteilerelement von im wesentlichen T-förmiger Struktur. Die Schenkelenden des durchgehenden Schenkels des Verteilerelements sind mit einer Steckkontaktvorrichtung und einer zu der Steckkontaktvorrichtung gegenüberliegenden und komplementären ersten Steckgegenkontaktvorrichtung ausgestattet, die mit Adern einer Sammelleitung untereinander elektrisch verbunden sind. Das Schenkelende des abzweigenden Schenkels des Verteilerelements ist mit einer zweiten Steckgegenkontaktvorrichtung ausgestattet.

Zur Verteilung elektrischer Stromkreise im explosionsgefährdeten Bereich zum Anschluß mehrerer Feldgeräte an eine Sammelleitung sind eine Mehrzahl von derartigen Verteilerelementen entlang ihren durchgehenden Schenkeln aufgereiht, wobei die Steckkontaktvorrichtung eines Verteilerelements mit der ersten Steckgegenkontaktvorrichtung eines benachbarten Verteilerelements verbunden ist. Dementsprechend ist die Sammelleitung über die Steckkontaktvorrichtungen, die dazu komplementären ersten Steckgegenkontaktvorrichtungen und die elektrische Verbindung zwischen der Steckkontaktvorrichtung und der ersten Steckgegenkontaktvorrichtung in jedem Verteilerelement realisiert.

Die an dem Schenkelende des abzweigenden Schenkels angeordnete zweite Steckgegenkontaktvorrichtung jedes Verteilerelements ist zum Anschluß mindestens eines Feldgeräts vorgesehen. Dazu ist die zweite Steckgegenkontaktvorrichtung über einen Vierpol mit der Sammelleitung verbunden.

Die erste Steckgegenkontaktvorrichtung des Verteilerelements weist Kontaktbuchsen auf, die in dem Verteilerelement in einem von der Kontaktbuchse isolierten Schaft in einer vorgegebenen Tiefe I versenkt angeordnet sind. Der Schaft weist eine Öffnung zum Einführen eines Kontaktstiftes einer Steckkontaktvorrichtung auf und umschließt im gesteckten Zustand den Kontaktstift unter Bildung eines zünddurchschlagsicheren Spaltes der Weite a.

Beim Stecken wird der Kontaktstift zunächst durch die Öffnung in den Schaft eingeführt, bevor ein elektrischer Kontakt mit der Kontaktbuchse hergestellt wird. Beim Öffnen und Schließen der elektrischen Verbindung zwischen dem Kontaktstift der Steckkontaktvorrichtung und der Kontaktbuchse der Steckgegenkontaktvorrichtung ist ein Volumen V eingeschlossen, welches nur durch den Spalt der Länge I und der Weite a zwischen dem Kontaktstift und dem den Kontaktstift umschließenden Schaft mit der explosionsgefährdeten Umgebung verbunden ist.

Solange das Verhältnis a zu I und a zu V einen bestimmten Grenzwert unterschreitet, wird beim Herstellen oder Lösen einer elektrischen Verbindung eine Zündung der Atmosphäre im explosionsgefährdeten Bereich sicher vermieden. Eine derartig aufgebaute lösbare Kontaktkombination erlaubt Manipulationen im laufenden Betrieb auch im explosionsgefährdeten Bereich.

Ein weiterer wesentlicher Vorteil der Erfindung liegt in der beliebigen Skalierbarkeit der Anordnung zur Verteilung elektrischer Stromkreise im explosionsgefährdeten Bereich. Soweit Bedarf an einem weiteren Feldgeräteanschluß besteht, ist der Anordnung zur Verteilung elektrischer Stromkreise lediglich ein weiteres Verteilerelement hinzuzufügen.

Weitere Einzelheiten und Vorteile der Erfindung sind nachstehend anhand von Ausführungsbeispielen näher erläutert. Die dazu erforderlichen Zeichnungen zeigen:
- Figur 1: den prinzipiellen Aufbau eines Verteilerelements
- Figur 2: ein Verteilerelement zum Anschluß eines nichteigensicheren Stromkreises
- Figur 3: ein Verteilerelement zum Anschluß eines eigensicheren Stromkreises
- Figur 4: eine Anordnung zur Verteilung elektrischer Stromkreise im explosionsgefährdeten Bereich mit einer Mehrzahl von Verteilerelementen
- Figur 5: ein Verteilerelement zur Verteilung mehrerer Stromkreise
- Figur 6: eine Anordnung zur Verteilung elektrischer Stromkreise im explosionsgefährdeten Bereich mit gruppierten Verteilerelementen

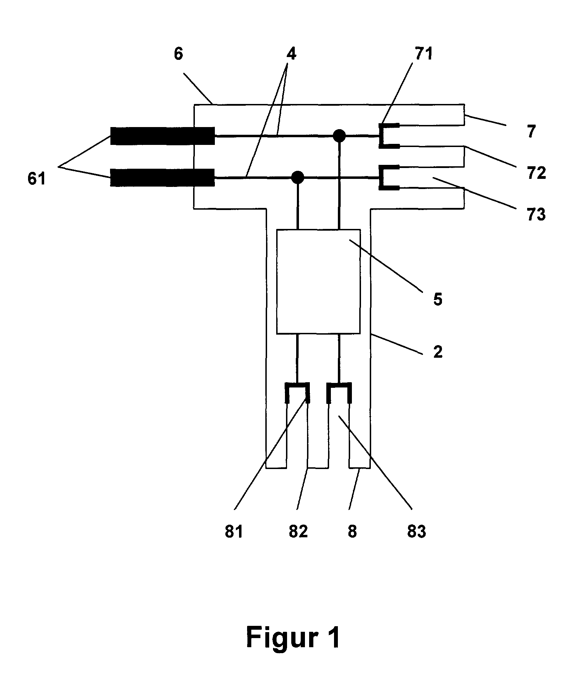

Gemäß Figur 1 ist ein aufreihbares Verteilerelement 2 von im wesentlichen T-förmiger Struktur. Die Schenkelenden des durchgehenden Schenkels des Verteilerelements 2 sind mit einer Steckkontaktvorrichtung 6 und einer zu der Steckkontaktvorrichtung 6 gegenüberliegenden und komplementären ersten Steckgegenkontaktvorrichtung 7 ausgestattet, die mit Adern einer Sammelleitung 4 untereinander elektrisch verbunden sind. Das Schenkelende des abzweigenden Schenkels des Verteilerelements 2 ist mit einer zweiten Steckgegenkontaktvorrichtung 8 ausgestattet.

Die an dem Schenkelende des abzweigenden Schenkels angeordnete zweite Steckgegenkontaktvorrichtung 8 jedes Verteilerelements 2 ist zum Anschluß mindestens eines Feldgeräts vorgesehen. Dazu ist die zweite Steckgegenkontaktvorrichtung 8 über einen Vierpol 5 mit der Sammelleitung 4 verbunden.

Die erste Steckgegenkontaktvorrichtung 7 des Verteilerelements 2 weist Kontaktbuchsen 71 auf, die jeweils in dem Verteilerelement 2 in einem von der Kontaktbuchse 71 isolierten Schaft 73 in einer vorgegebenen Tiefe versenkt angeordnet sind. Der Schaft 73 weist eine Öffnung 72 zum Einführen eines Kontaktstiftes 61 der Steckkontaktvorrichtung 6 auf und umschließt im gesteckten Zustand den Kontaktstift 61 unter Bildung eines Spaltes vorgegebener Weite.

In Abhängigkeit von der Art des abgezweigten Stromkreises und des anzuschließenden Feldgeräts sind die zweite Steckgegenkontaktvorrichtung 8 und der Vierpol 5 zueinander korrespondierend unterschiedlich ausgestaltet.

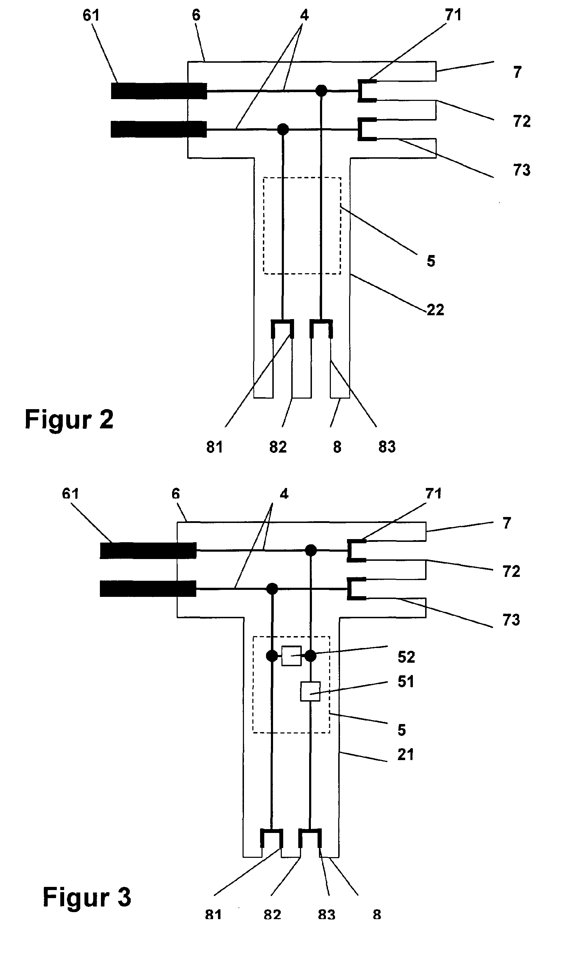

In einer ersten Ausführungsform gemäß Figur 2 ist unter Verwendung gleicher Bezugszeichen für gleiche Mittel ein Verteilerelement 22 zur Abzweigung eines nichteigensicheren Stromkreises dargestellt. Dabei weist die zweite Steckgegenkontaktvorrichtung 8 dieselben Merkmale wie die erste Steckgegenkontaktvorrichtung 7 auf. Die Kontaktbuchsen 81 sind in dem abzweigenden Schenkel des Verteilerelements 22 jeweils in einem von der Kontaktbuchse 81 isolierten Schaft 83 in einer vorgegebenen Tiefe versenkt angeordnet. Der Schaft 83 weist eine Öffnung 82 zum Einführen eines Kontaktstiftes auf. Der Vierpol 5 besteht aus zwei Leitungen zur elektrischen Verbindung der Kontaktbuchsen 81 mit der Sammelleitung 4.

In Figur 3 ist unter Verwendung gleicher Bezugszeichen für gleiche Mittel eine zweite Ausführungsform des Verteilerelements, das zur Unterscheidung von dem Gegenstand nach Figur 2 mit dem Bezugszeichen 21 versehen ist, zur Abzweigung eines eigensicheren Stromkreises dargestellt. Der Vierpol 5 umfaßt Mittel zur Strombegrenzung 51 und Mittel zur Spannungsbegrenzung 52, die in zwei Leitungen zur elektrischen Verbindung der Kontaktbuchsen 81 mit der Sammelleitung 4 eingeschaltet sind. Die Mittel zur Strombegrenzung 51 und Spannungsbegrenzung 52 sind derart ausgelegt, daß der über ein an die zweite Steckgegenkontaktvorrichtung 8 anschließbares Feldgerät schließbare Stromkreis eigensicher ist.

Die Kontaktbuchsen 81 der zweiten Steckgegenkontaktvorrichtung 8 sind in einem Schaft 83 versenkt angeordnet, der eine Öffnung zum Einführen eines Kontaktstifts aufweist. Dabei dient der Schaft 83 lediglich der mechanischen Führung des einzuführenden Kontaktstifts. Sowohl die Schaftlänge als auch die sich beim Einführen des Kontaktstifts ergebende Spaltweite zwischen dem Kontaktstift und der Wand des Schafts 83 sind für den über die zweite Steckgegenkontaktvorrichtung 8 abgezweigten, eigensicheren Stromkreis belanglos.

Zweckmäßigerweise ist die Länge des Schafts 83 bei einem Verteilerelement 21 zur Abzweigung eines eigensicheren Stromkreises viel geringer als die Länge des Schafts 83 bei einem Verteilerelement 22 zur Abzweigung eines nichteigensicheren Stromkreises ausgeführt. Dementsprechend sind Kontaktstifte zum Anschluß eines in einem eigensicheren Stromkreis eingebundenen Feldgeräts kürzer als die Kontaktstifte zum Anschluß eines in einem nichteigensicheren Stromkreis eingebundenen Feldgeräts. Dadurch wird in vorteilhafterweise eine unverwechselbare Kodierung von Steckverbindungen eigensicherer und nichteigensicherer Stromkreise erreicht.

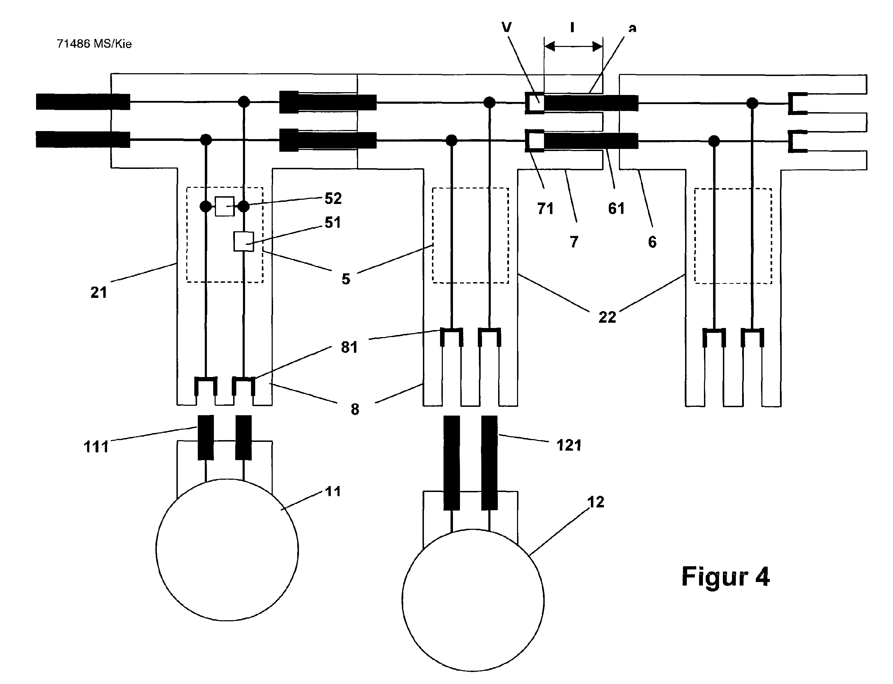

In Figur 4 ist eine Anordnung zur Verteilung elektrischer Stromkreise im explosionsgefährdeten Bereich mit einer Mehrzahl von Verteilerelementen 21 und 22 gezeigt. Zur Verteilung elektrischer Stromkreise im explosionsgefährdeten Bereich zum Anschluß mehrerer unterschiedlicher Feldgeräte an eine Sammelleitung sind eine Mehrzahl von derartigen Verteilerelementen 21 und 22 entlang ihren durchgehenden Schenkeln aufgereiht, wobei die Steckkontaktvorrichtung 6 eines Verteilerelements 21 und 22 mit der ersten Steckgegenkontaktvorrichtung 7 eines benachbarten Verteilerelements 21 und 22 verbunden ist. Dementsprechend ist die Sammelleitung 4 über die Steckkontaktvorrichtungen 6, die dazu komplementären ersten Steckgegenkontaktvorrichtungen 7 und die elektrische Verbindung zwischen der Steckkontaktvorrichtung 6 und der ersten Steckgegenkontaktvorrichtung 7 in jedem Verteilerelement 21 und 22 realisiert.

Im einzelnen ist in Figur 4 unter Verwendung gleicher Bezugszeichen für gleiche Mittel ein Verteilerelement 21 zur Abzweigung eines eigensicheren Stromkreises gemäß Figur 3 mit einem Verteilerelement 22 zur Abzweigung eines nichteigensicheren Stromkreises gemäß Figur 2 im vollständig zusammengesteckten Zustand dargestellt. Dem Verteilerelement 21 zur Abzweigung eines eigensicheren Stromkreises ist ein Feldgeräteanschluß 11 für einen eigensicheren Stromkreis zugeordnet. Dieser Feldgeräteanschluß 11 weist korrespondierend zu der zweiten Steckgegenkontaktvorrichtung 8 des Verteilerelements 21 kurze Kontaktstifte 111 auf. Dem angesteckten Verteilerelement 22 zur Abzweigung eines nichteigensicheren Stromkreises ist ein Feldgeräteanschluß 12 für einen nichteigensicheren Stromkreis zugeordnet. Dieser Feldgeräteanschluß 12 weist korrespondierend zu der zweiten Steckgegenkontaktvorrichtung 8 des Verteilerelements 22 lange Kontaktstifte 121 auf, die geeignet sind, die versenkten Kontaktbuchsen 81 zu kontaktieren.

Darüber hinaus ist in Figur 4 ein zweites Verteilerelement 22 zur Abzweigung eines nichteigensicheren Stromkreises im teilweise gesteckten Zustand gezeigt. Dabei sind die Kontaktstifte 61 der Steckkontaktvorrichtung 6 des zweiten Verteilerelements 22 bis zum Erreichen der Kontaktbuchsen 71 der Steckgegenkontaktvorrichtung 7 des ersten Verteilerelements 22 in die Schäfte in einer vorgegebenen Tiefe I eingeführt. Der Schaft umschließt im gesteckten Zustand den Kontaktstift 61 unter Bildung eines Spaltes der Weite a.

Beim Stecken wird der Kontaktstift 61 zunächst durch die Öffnung in den Schaft eingeführt, bevor ein elektrischer Kontakt mit der Kontaktbuchse 71 hergestellt wird. Beim Öffnen und Schließen der elektrischen Verbindung zwischen dem Kontaktstift 61 der Steckkontaktvorrichtung 6 und der Kontaktbuchse 71 der Steckgegenkontaktvorrichtung 7 ist ein Volumen V eingeschlossen, welches nur durch den Spalt der Länge I und der Weite a zwischen dem Kontaktstift 61 und dem den Kontaktstift 61 umschließenden Schaft mit der explosionsgefährdeten Umgebung verbunden ist.

Solange das Verhältnis a zu I und a zu V einen bestimmten Grenzwert unterschreitet, wird beim Herstellen oder Lösen einer elektrischen Verbindung eine Zündung der Atmosphäre im explosionsgefährdeten Bereich sicher vermieden. Eine derartig aufgebaute lösbare Kontaktkombination erlaubt Manipulationen im laufenden Betrieb auch im explosionsgefährdeten Bereich.

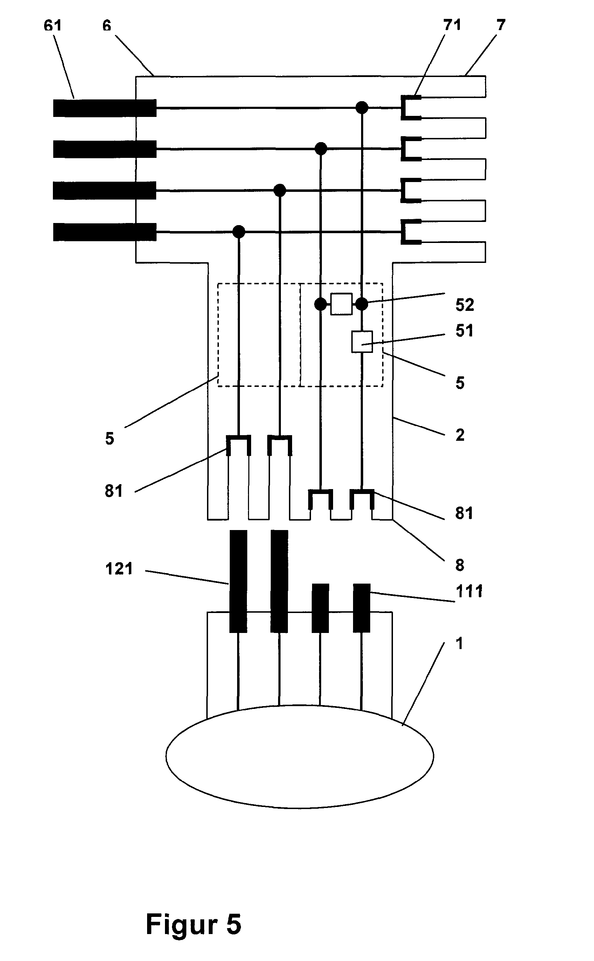

In weiterer Ausgestaltung der Erfindung ist in Figur 5 unter Verwendung gleicher Bezugszeichen für gleiche Mittel ein Verteilerelement 2 zur Abzweigung eines eigensicheren und eines nichteigensicheren Stromkreises dargestellt. Dabei sind die Steckkontaktvorrichtung 6 und die erste Steckgegenkontaktvorrichtung 7 unter Beibehaltung der Bauform gleichartig entsprechend der erforderlichen Polzahl erweitert. Die zweite Steckgegenkontaktvorrichtung 8 weist für den abgezweigten nichteigensicheren Stromkreis entsprechend einer vorgegebenen Tiefe I versenkte Kontaktbuchsen 81 gemäß der Beschreibung zu Figur 2 und für den abgezweigten eigensicheren Stromkreis geringfügig versenkte Kontaktbuchsen 81 gemäß der Beschreibung zu Figur 3 auf. Korrespondierend dazu weist ein Vierpol 5 für den abgezweigten nichteigensicheren Stromkreis durchgehende Leitungen und der Vierpol 5 für den abgezweigten eigensicheren Stromkreis Mittel zur Strombegrenzung 51 und zur Spannungsbegrenzung 52 auf.

Passend zu der zweiten Steckgegenkontaktvorrichtung 8 des Verteilerelements 2 ist ein Feldgeräteanschluß 1 dargestellt der für den nichteigensicheren Stromkreis lange Kontaktstifte 112 und für den eigensicheren Stromkreis kurze Kontaktstifte 111 aufweist. Aus der gezeigten Darstellung wird die bereits beschriebene Verwechselungssicherheit der Steckverbindungen offenbar.

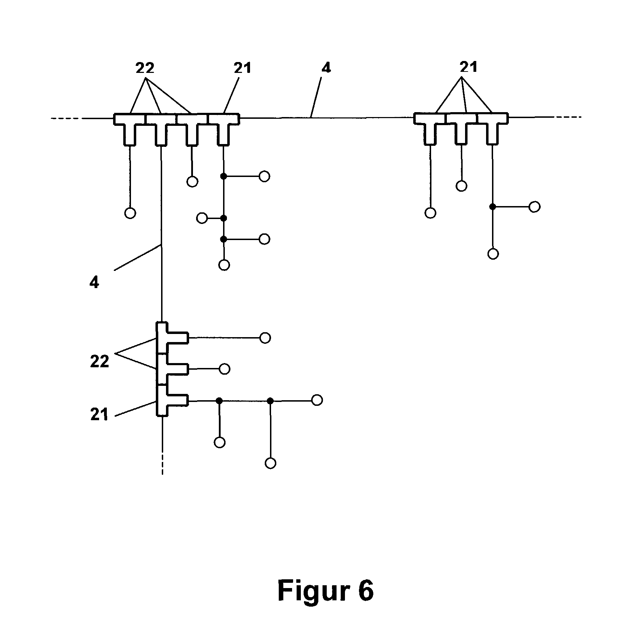

Schließlich ist in Figur 6 ein Ausschnitt aus einer verzweigten Anordnung zur Verteilung elektrischer Stromkreise im explosionsgefährdeten Bereich mit gruppierten Verteilerelementen 21 und 22 gezeigt. Dabei sind in derselben Sammelleitung 4 Verteilerelemente 21 zur Abzweigung jeweils eines eigensicheren Stromkreises und Verteilerelemente 22 zur Abzweigung jeweils eines nichteigensicheren Stromkreises eingeschaltet. An die Verteilerelemente 21 zur Abzweigung jeweils eines eigensicheren Stromkreises sind jeweils ein oder mehrere eigensichere Feldgeräte angeschlossen. Die Verteilerelemente 22 zur Abzweigung jeweils eines nichteigensicheren Stromkreises sind jeweils zum Anschluß eines nichteigensicheren Feldgeräts vorgesehen.

Dabei kann vorgesehen sein, an ein Verteilerelement 22 zur Abzweigung eines nichteigensicheren Stromkreises eine weitere Sammelleitung 4 mit mindestens einem weiteren Verteilerelement 22 zur Abzweigung eines nichteigensicheren Stromkreises anzuschließen. Zweckmäßigerweise sind die an die weitere Sammelleitung 4 angeschlossenen Verteilerelemente 21 und 22 gruppiert.

Vorteilhafterweise ist die beschriebene Anordnung zur Verteilung elektrischer Stromkreise zur verzweigten Verteilung eigensicherer und nichteigensicherer Stromkreise im explosionsgefährdeten Bereich geeignet.

Der erfindungsgemäße Verteileranordnung erlaubt es, durch einfaches Aneinanderstecken einer beliebigen Anzahl von Verteilerelementen 2 über die Steckkontaktvorrichtungen 6,7 eine beliebige Anzahl von Feldgeräten 1 an die Sammelleitung 4 anzuschließen. Dabei kann die Sammelleitung 4 zur Energieübertragung und/oder zur Übertragung von Kommunikationssignalen verwendet sein.

Durch die erfindungsgemäße Ausbildung der Steckkontaktvorrichtungen 6 und 7 ist es möglich, die Verteilerelemente 2 im explosionsgefährdeten Bereich unterzubringen und im laufenden Betrieb unter Spannung stehend zu stecken beziehungsweise zu entfernen.

Vorteilhafterweise ist der Feldbus trotz seiner Ausführung als nichteigensicherer Stromkreis im explosionsgefährdeten Bereich durch Hinzufügen weiterer Verteilerelemente 2 beliebig erweiterbar. Die Anzahl der Feldgeräte an derselben Sammelleitung 4 ist ausschließlich durch die Speiseleistung der im Wartenbereich angeordneten PNK begrenzt.

Insbesondere beim Anschluß eigensicherer Feldgeräte über eigensichere Stromkreise ist durch diese Anordnung eine Vielzahl von Feldgeräten anschließbar, da die Begrenzungsmittel 51 und 52 ausschließlich und selektiv auf den jeweils an der abzweigenden Steckkontaktvorrichtung 8 angeschlossenen Feldgeräteanschluß 11 zum Anschluß eines eigensicheren Stromkreise wirken und die Sammelleitung 4 selbst keine Begrenzungselemente aufweist.

Vorteilhafterweise sind an dieselbe Sammelleitung 4 sowohl eigensichere als auch nichteigensichere Feldgeräte anschaltbar.

### Bezugszeichenliste

- 1: Feldgeräteanschluß
- 11: Feldgeräteanschluß für eigensicheren Stromkreis
- 12: Feldgeräteanschluß für nichteigensicheren Stromkreis

- 2: Verteilerelement
- 21: Verteilerelement für eigensicheren Stromkreis
- 22: Verteilerelement für nichteigensicheren Stromkreis

- 4: Sammelleitung

- 5: Vierpol
- 51: Strombegrenzung
- 52: Spannungsbegrenzung

- 6: Steckkontaktvorrichtung
- 61: Kontaktstift

- 7: erste Steckgegenkontaktvorrichtung
- 71, 81: Kontaktbuchse
- 72, 82: Öffnung
- 73, 83: Schaft

- 8: zweite Steckgegenkontaktvorrichtung

## Patentansprüche

1. Anordnung zur Verteilung elektrischer Stromkreise im explosionsgefährdeten Bereich zum Anschluß mehrerer Feldgeräte an eine Sammelleitung (4) bestehend aus gruppiert angeordneten Verteilerelementen (2, 21, 22) von im wesentlichen T-förmiger Struktur,
wobei jedes Verteilerelement (2, 21, 22)
- an den gegenüberliegenden Schenkelenden des durchgehenden Schenkels mit einer Kontaktstifte (61) aufweisenden Steckkontaktvorrichtung (6) und einer zu der Steckkontaktvorrichtung (6) gegenüberliegenden und komplementären, in einem Schaft (73) in vorgegebener Tiefe versenkte Kontaktbuchsen (71) aufweisenden ersten Steckgegenkontaktvorrichtung (7) ausgestattet ist, wobei jeder Kontaktstift (61) über eine Ader der Sammelleitung (4) mit jeweils einer Kontaktbuchse (71) verbunden ist,
- das Schenkelende des abzweigenden Schenkels mit einer zweiten, Kontaktbuchsen (81) aufweisenden Steckgegenkontaktvorrichtung (8) ausgestattet ist, deren Kontaktbuchsen (81) über einen Vierpol (5) mit der Sammelleitung (4) verbunden sind, und
wobei die Verteilerelemente (2, 21, 22) entlang ihren durchgehenden Schenkeln unter Bildung zünddurchschlagsicherer Spalte zwischen den Kontaktstiften (61) der Steckkontaktvorrichtung (6) und den Schäften (73) der ersten Steckgegenkontaktvorrichtung (7) aufgereiht sind.

2. Anordnung nach Anspruch 1
**dadurch gekennzeichnet,**
**daß** jede Kontaktbuchse (81) der zweiten Steckgegenkontaktvorrichtung (8) des Verteilerelements (22) zur Abzweigung eines nichteigensicheren Stromkreises jeweils in einem von der Kontaktbuchse (81) isolierten Schaft (83) in einer vorgegebenen Tiefe versenkt angeordnet ist und daß der Vierpol (5) zur elektrischen Verbindung der Kontaktbuchsen (81) mit der Sammelleitung (4) aus zwei Leitungen besteht.

3. Anordnung nach Anspruch 1
**dadurch gekennzeichnet,**
**daß** die Kontaktbuchsen (81) der zweiten Steckgegenkontaktvorrichtung (8) des Verteilerelements (21) zur Abzweigung eines eigensicheren Stromkreises über einen Vierpol (5) mit der Sammelleitung (4) verbunden sind, der Mittel zur Strombegrenzung (51) und Mittel zur Spannungsbegrenzung (52) aufweist.

4. Anordnung nach einem der Ansprüche 1 bis 3
**dadurch gekennzeichnet,**
**daß** an mindestens einem Verteilerelement (22) zur Abzweigung eines nichteigensicheren Stromkreises eine weitere Sammelleitung (4) zum Anschluß von weiteren Verteilerelementen (2, 21, 22) zur Abzweigung eigensicherer und nichteigensicherer Stromkreise angeschlossen ist.

5. Anordnung nach einem der Ansprüche 1 bis 4
**dadurch gekennzeichnet,**
**daß** das Verteilerelement (2) zur Abzweigung mindestens eines nichteigensicheren und mindestens eines eigensicheren Stromkreises für jeden abgezweigten Stromkreis einen Vierpol (5) mit den zu dem jeweiligen Stromkreis gehörenden Mitteln aufweist.
